# EUROPEAN PATENT SPECIFICATION

(11) **EP 2 894 767 B1**
(45) Date of publication and mention of the grant of the patent: **10.01.2018**
(21) Application number: 14194405.8
(22) Date of filing: 21.11.2014
(51) Int. Cl.: H02K 1/24, H02K 1/30, H02K 7/18, H02K 1/20

(54) **Improved electric machine couplable to a fluid-dynamic machine, and corresponding fluid-dynamic machine**
Verbesserte elektrische Maschine koppelbar zu einer fluiddynamischen Maschine und entsprechende fluiddynamische Maschine
Machine électrique amöliorée, adaptée pour être couplée à une machine à fluide dynamique, et une machine à fluide dynamique correspondante.

(30) Priority: 22.11.2013 IT TO20130952
(43) Date of publication of application: 15.07.2015
(73) Proprietor: Ge Avio S.r.l., 10040 Rivalta di Torino (TO) (IT)
(72) Inventor: Cipriani, Marco, 10135 Torino (IT)
(74) Representative: Nannucci, Lorenzo

(56) References cited:
- EP-A1- 1 130 746
- WO-A2-2009/093181
- US-A1- 2002 089 251
- US-A1- 2011 291 413
- US-A1- 2013 249 345

## Description

The present invention concerns an improved electric machine, adapted to be coupled to a fluid-dynamic machine, and to a corresponding fluid-dynamic machine.

Electromagnetic devices (or "electric machines") are known having reversible generator or electric motor function, i.e. able to convert kinetic energy into electric energy in a first operating mode (generator), and electric energy into kinetic energy in a second operating mode (motor).

There are various situations in which use of these reversible electric machines is advantageous, for example in systems that feature a rotating element (for example the impeller of a turbine), where it is possible to exploit the rotation of this element for the generation of electric energy or, alternatively, to rotate the same element by supplying electric energy.

Patent applications WO 2009/093181 and WO 2009/093183, in the name of the same Applicant, disclose an electric machine with reversible generator-motor operation.

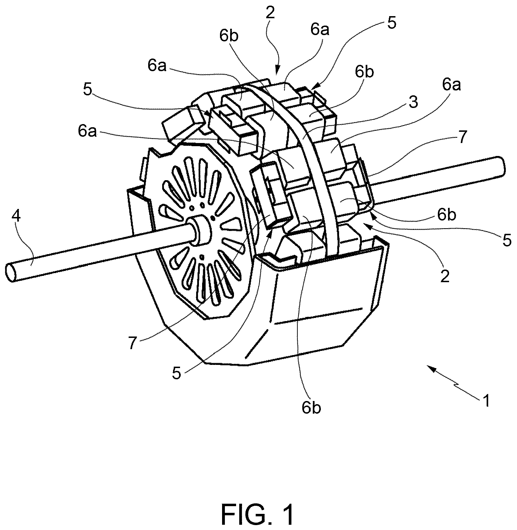

As shown in figure 1, this electric machine, indicated in general by 1, comprises a plurality of modules (or cells) 2, independent of one another, each able to operate with reversible function as a motor or, alternatively, as a generator.

The electric machine 1 comprises a rotor 3, having the form of a disc or ring, which is mounted on a rotation shaft 4, or can be integrated in the impeller of a fluid-dynamic machine, in particular a turbine.

Rotor 3 carries a plurality of permanent magnets (not illustrated in figure 1), equally spaced along an outer circumference of the disc or ring, and defining a succession of alternatively opposite magnetic poles.

The electric machine 1 furthermore comprises a stator, which includes, for each module 2, at least one magnetic yoke 5, having two polar expansions 6a, 6b, around which a respective coil is wound, arranged facing a respective pair of permanent magnets of the rotor 3 (figure 1 shows a pair of magnetic yokes 5, for each module 2, arranged on the opposite side of the rotor 3, each facing the respective pair of permanent magnets).

The magnetic yokes 5 therefore form, as a whole, the stator of the electric machine 1.

Each magnetic yoke 5 (or pair of magnetic yokes) forms with the respective pair of permanent magnets a magnetic circuit, designed to contribute to operation as a generator or, alternatively, as a motor of the electric machine 1.

In particular, the coils wound around the polar expansions 6a, 6b of each magnetic yoke 5 can be electrically connected, in an individual manner, to a source of electric energy or alternatively to an electric user, or load; furthermore, each magnetic yoke 5 is mounted on a respective support 7 (shown schematically in figure 1), the position of which is independently adjustable axially and radially with respect to the rotor 3, so as to allow a static and/or dynamic adjustment of the gap between the polar expansions 6a, 6b and the respective permanent magnets (i.e. of the air-gap of the relative magnetic circuit).

The electric machine 1 therefore allows a reversible motor-generator operation of each module 2 and furthermore, in principle, the simultaneous operation of some of the modules 2 as a motor and of some other modules 2 as a generator.

The present Applicant has realized that this electric machine solution has some drawbacks, which do not allow full exploitation of the advantages thereof when the same electric machine is coupled to the impeller of a fluid-dynamic machine, for example a turbine.

In particular, the permanent magnets carried by the rotor 3 of the electric machine 1 are subject in use to extremely high centrifugal forces, due to the rotation of the impeller of the turbine, to which the same rotor 3 is coupled; these centrifugal forces can be such as to cause detachment of the permanent magnets from the rotor 3, even if particular technical expedients are adopted for fastening them to the rotor 3.

During use, the high operating temperatures of the fluid-dynamic machine may cause loss of the electromagnetic properties of the permanent magnets (so-called "demagnetization"), with the consequent loss of functionality of the entire electric machine 1.

The solution adopted also entails considerable implementation difficulties if the fluid-dynamic machine is required to operate in particularly harsh environments (with abrasive or corrosive substances).

Furthermore, the electromagnetic properties of the magnets cannot be de-activated in the event of a failure of the electric machine 1.

US 2002/089251 A1 discloses a rotary electric machine including a stator and a rotor having a rotor core rotatable and opposite to the stator through a gap. The rotor core has a modular structure and is composed of a plurality of projecting pole magnetic core portions arranged in a side of the gap and along the circumferential direction and rotor yoke portions for forming a magnetic path conducting magnetic fluxes of each of the projecting pole magnetic core portions.

US 2013/249345 A1 discloses a rotor assembly including a hub and a rotor core, with modular structure, positioned at least partially around the hub and coupled thereto. The rotor core is at least partially defined by a first segment and a second segment that are configured to connect or interlock.

US 2011/291413 A1 discloses an electric power generation system, which is constructed of multiple similar generator modules arranged between a rotor and a stator. The rotor may be coupled to and/or integrated with a turbine that is configured to rotate in the presence of a fluid stream such as wind or water.

EP 1 130 746 A1 discloses a rotary machine composed of a rotor having magnetic poles and a stator. The rotor is composed of a metallic material having ferromagnetic parts and non-magnetic parts.

WO 2009/093181 A2 discloses an electromagnetic device having a stator and a rotor rotating between facing surfaces of the stator and bearing a plurality of magnets distributed at regular intervals along its periphery. The magnets are so arranged that they form a sequence of alternately opposite poles on the surfaces of the rotor directed towards the stator.

The need is therefore felt for an electric machine, in particular of the "embedded" and "direct drive" type (i.e. that can be integrated in the impeller of a fluid-dynamic machine and mounted radially with respect to the rotation axis of the impeller), which overcomes the limitations associated with the solutions of known type.

The aim of the present invention is to meet this need.

According to the present invention, an electric machine and a corresponding fluid-dynamic machine are therefore provided, as defined in the attached claims.

For a better understanding of the present invention, preferred embodiments thereof are now described, purely by way of nonlimiting example and with reference to the accompanying drawings, in which:
- figure 1 shows a schematic perspective view of a modular reversible electromagnetic device of a known type;
- figure 2 is a schematic sectional view of an electric machine according to the present solution, coupled to the impeller of a fluid-dynamic machine;
- figure 3 shows an enlarged portion of a rotor module of the electric machine of figure 2;
- figure 4 shows an enlarged portion of a variant of the rotor module of figure 3; and
- figure 5 is a schematic sectional view of an electric machine, according to a different embodiment of the present solution.

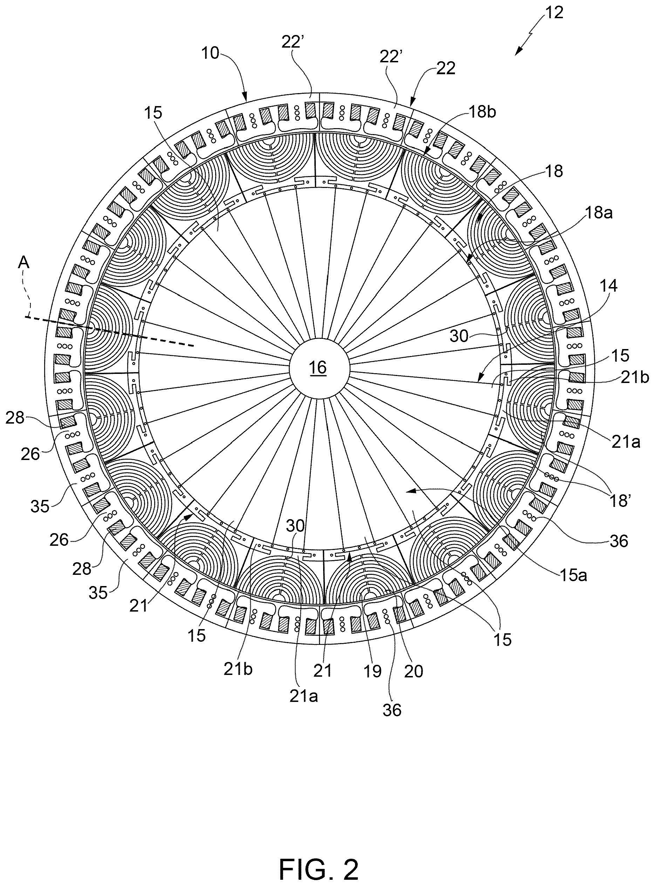

With reference to figure 2, an electric machine 10 is now described, configured to be coupled in an integrated manner to a fluid-dynamic machine 12 so as to provide an embedded and direct drive solution.

The fluid-dynamic machine 12, of per se known type, not described here in detail, comprises an impeller 14 provided with a plurality of blades 15 which rotate in use around a central shaft 16, which defines the rotation axis of the impeller 14; the fluid-dynamic machine 12 is, for example, a turbine.

According to a particular aspect of the present solution, the electric machine 10 is of the reluctance type (so called "switched or synchronous reluctance machine") in the preferred embodiment without permanent magnets; furthermore, the electric machine 10 has a reversible motor/generator operation.

In a per se known manner, not described here in detail, electric reluctance machines have anisotropic rotor structures without magnets, with conventional lamination (orthogonal to the rotor axis) or axial lamination, consisting of an alternation of magnetic portions and portions of non-magnetic material. In particular, the portions of non-magnetic material constitute barriers to the electromagnetic flow and may also consist of empty regions of suitable shape and size provided in the rotor structures; the magnetic portions, having a high magnetic permeability, constitute the magnetic poles of the electric machine rotor.

The reluctance structures may also be conveniently obtained by exploiting biphasic materials (for example as described in US 2008/0296994 A1) and in this latter case can be particularly compact, resistant and dependable.

Considering a pair of orthogonal axes d-q, so that axis d coincides with a direction of minimum reluctance and the axis q coincides with a region of maximum reluctance of the rotor, the value L_{d}/L_{q}, where L indicates the inductance value in the two directions, is defined "anisotropy ratio". The higher the anisotropy ratio, the greater the electromagnetic torque developed by the electric machine.

Examples of electric reluctance machines are described, for example, in WO 2011/154045 A1, US 5,818,140, WO 2011/018119 A1 and US 2007/0108853 A1.

Electric machine 10 is configured so as to be arranged on the outer periphery of the impeller 14 of the fluid-dynamic machine 12.

In particular, the electric machine 10 comprises an annular rotor 18, which has a plurality of magnetic portions 19 and a plurality of electromagnetic flow barriers 20, interposed between the magnetic portions 19 and separating them from one another.

The annular rotor 18 has an inner surface 18a and an outer surface 18b, and surrounds the impeller 14 of the fluid-dynamic machine 12, being arranged with radial symmetry around the central shaft 16 and having longitudinal extension along the same central shaft 16.

In particular, the annular rotor 18 is coupled to the impeller 14 by means of suitable coupling elements 21, positioned between outer ends 15a of the blades 15 (or ends positioned at a maximum distance from the central shaft 16) and the inner surface 18a of the annular rotor 18.

The above-mentioned coupling elements 21 feature, in general, a mechanical interference between portions with positive geometry and corresponding portions with negative geometry, including for example a joint of the "mushroom", "pine" or "dovetail" type.

The electric machine 10 further comprises a stator 22, arranged externally to the assembly consisting of the impeller 14 and the annular rotor 18.

The stator 22 also has an annular configuration with radial symmetry around the central shaft 16 and comprises a plurality of polar expansions 26, around which respective coils (or windings, which can be concentrated, as illustrated here, or distributed, as will be illustrated below) 28 are wound.

Coils 28 can be electrically connected selectively, and alternatively, to electrical supply sources (not illustrated), when the electric machine 10 operates as an electric motor converting electric energy into mechanical energy, or to users, or electric loads (not illustrated), when the electric machine 10 operates as an electric generator, converting mechanical energy into electric energy.

When operating as an electric motor, the application of appropriate excitation currents in sinusoidal or distorted (for exampled pulsed) regime to the coils 28 of the stator 22 generates a movement of the annular rotor 18 to align the direction of maximum magnetic permeability (i.e. axis d) with the direction of the resulting stator magnetic flow. This movement results in an overall rotation of the annular rotor 18 of the electric machine 10.

Analogously, during operation of the electric machine 10 as a generator, a rotation of the annular rotor 18, caused by the corresponding mechanical rotation of the impeller 14 of the associated fluid-dynamic machine 12, causes a variation in the stator magnetic flow and the generation of a resulting electric current in the coils 28.

In one currently preferred embodiment of the present solution, shown in the above-mentioned figure 2, the annular rotor 18 has a modular structure, comprising a plurality of rotor modules 18', arranged radially around the central shaft 16, each defining an annular portion of the rotor ring and having a median axis arranged along a respective radial direction A.

The rotor modules 18' can be independent, and electrically, magnetically, thermally and mechanically isolated and decoupled from one another.

Each rotor module 18' has a respective arrangement of electromagnetic flow barriers 20, and a respective plurality of magnetic portions 19, made of a suitable ferromagnetic material.

In particular, in the embodiment illustrated, the electromagnetic flow barriers 20 are configured (in the section illustrated, transverse to the central shaft 16) in concentric semicircles, symmetrical around the radial direction A and with an increasing radius, from the outer surface 18b to the inner surface 18a of the annular rotor 18.

The electromagnetic flow barriers 20 can be made for example by removal of material, by cutting, for example using a laser, or by localised heat treatment, and comprise empty regions or regions of a suitable non-ferromagnetic material.

The magnetic portions 19, arranged between respective electromagnetic flow barriers 20, also have, in general, a semicircular configuration and can be connected to one another by a connection element 30, which extends along the radial direction A.

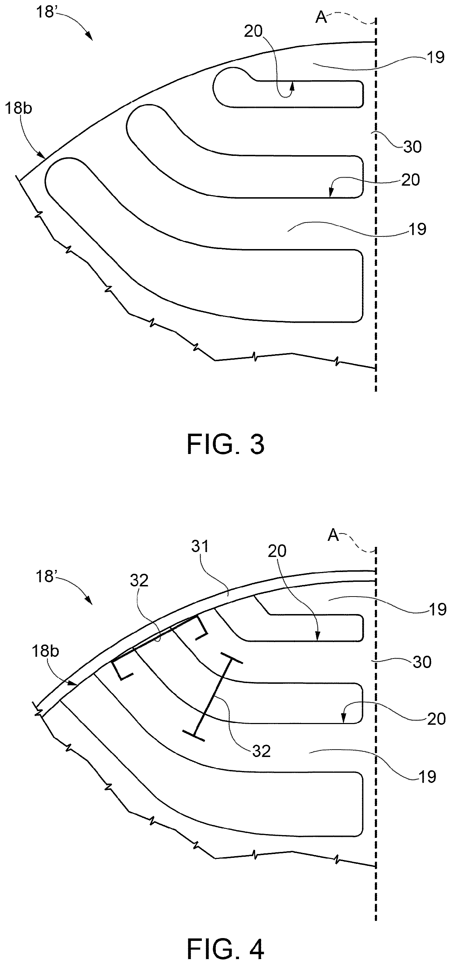

According to one aspect of the present solution, as illustrated in the detail of figure 3, the outer surface 18b of the annular rotor 18, and in particular of each rotor module 18', does not have cut-out portions in the vicinity of the electromagnetic flow barriers 20, in order to avoid possible detachment of the parts, due to the high centrifugal forces developing in use during rotation of the impeller 14.

In particular, the outer surface 18b is continuous and not interrupted for each rotor module 18'.

The continuity of the above-mentioned outer surface 18b entails an undesired increase in the quadrature flow between the ends of the magnetic portions 19 separated by the electromagnetic flow barriers 20, which can globally reduce the anisotropy ratio and therefore lead to a deterioration in the performance of the electric machine 10.

In a further aspect of the present solution, therefore, as illustrated in the detail of figure 4, the magnetic portions 19 are separated from one another, at their ends, and the outer surface 18b of the annular rotor 18 is coated with a coating layer 31, of a non-ferromagnetic material, such as not to create magnetic short circuits between the electromagnetic flow barriers 20. In a manner not illustrated, the coating layer 31 extends in a longitudinal direction, parallel to the central shaft 16.

The coating 31 avoids detachment of the magnetic portions 19 due to the centrifugal effects, which could occur due to their separation in the area of the respective ends.

Furthermore, as illustrated in the same figure 4, reinforcement elements 32 can be provided, for example in the form of reinforcing bridges and/or clamps, composed of non-ferromagnetic material, for example, arranged between adjacent magnetic portions 19, in order to further increase the coupling between the parts.

The reinforcement elements 32 extend between two adjacent magnetic portions 19 crossing the interposed electromagnetic flow barrier 20; the reinforcement elements 32 are appropriately shaped, for example having H- or C-shaped profile, and are coupled by slotting into the magnetic portions 19.

A similar solution may be obtained using special newly conceived materials, such as those described in the above-mentioned US 2008/0296994. In the case in point, the rotor structure would consist of one single solid disc in which the non-magnetic barriers are obtained by localised heat treatment.

Each rotor module 18' furthermore carries a first coupling element 21a (figure 2) designed to couple, for example by slotting in, with a corresponding coupling element carried by the impeller 14 of the fluid-dynamic machine 12.

In one embodiment, illustrated in the above-mentioned figure 2, each blade 15 carries a respective second coupling element 21b, designed to couple with a corresponding first coupling element 21a carried by a rotor module 18' arranged along the radial extension of the same blade 15.

In this solution, the number of rotor modules 18' corresponds to the number of blades 15 of the impeller 14 of the fluid-dynamic machine 12, and furthermore to the number of first and second coupling elements 21a, 21b (the above-mentioned number of rotor modules 18' may differ from the number of blades 15, which could for example be higher).

Alternative embodiments are also possible.

For example, there can be one single second coupling element 21b, carried overall by the outer periphery of the blades 15 of the impeller 14, to provide the coupling with the annular rotor 18, and in particular with the rotor modules 18'.

In any case, advantageously, the coupling elements 21 are configured to guarantee a desired precision in the assembly of the components, and may further be configured to recover any play or misalignment that may occur during operation of the electric machine 10.

In general, therefore, each rotor module 18' can be coupled to at least one blade 15 of the impeller 14, by means of at least one coupling element 21a (for example, two or more blades 15 can couple to one single rotor module 18' by means of one single coupling element 21a).

According to a further aspect of the present embodiment, the stator 22 also has a modular structure, comprising a plurality of stator modules 22', arranged radially around the central shaft 16, for example in a different number with respect to the rotor modules 18'.

Each stator module 22' is magnetically coupled to a portion of rotor module 18'.

In particular, the stator magnetic field lines generated by each stator module 22' are closed within the rotor module 18', which is in the position to be excited.

Advantageously, the electric machine 1 allows reversible motor-generator operation of the stator modules 22', and furthermore simultaneous operation of some of the modules as motor and some other modules as generator.

Each stator module 22' comprises a pair of polar expansions 26 and respective coils 28; in particular, the polar expansions 26 each have a respective base coupled to a support 35, in common.

The support 35 is coupled to movement means (not illustrated) which allow adjustment thereof in a radial and axial direction, and further allow rotation so as to statically and/or dynamically adjust the characteristics of the air-gap of the magnetic circuit formed with the respective rotor module 18'.

Furthermore, as shown in the same figure 2, appropriate cooling systems 36, for example in the form of channels, can be provided in the polar expansions 26.

The advantages of the solution described are clear from the preceding discussion.

In particular, a solution of fluid-dynamic machine 12 is provided, the impeller 14 of which is characterised by an annular rotor 18, mainly of the modular type arranged along the outer periphery of the same impeller 14; the rotor modules 18', which have magnetic flow barriers 20, provide, together with the stator modules 22', arranged around the impeller/rotor assembly, an embedded and direct drive electric machine 10 of the reluctance type. In particular, the electromagnetic flow barriers 20, consisting of empty regions or regions of non-ferromagnetic material, characterise the single rotor modules 18' and, therefore, the annular rotor 18 as a whole.

The solution proposed, being mainly of the modular type, simplifies the installation of an electric machine on the impeller of a turbine, especially if the latter has large dimensions.

Furthermore, the modularity of the solution proposed also allows greater repeatability of the elements produced.

Compared to analogous solutions featuring different technologies such as permanent magnet technology, the solution proposed, with passive rotor (or without active elements), overcomes the criticalities relative to a deterioration of the electromagnetic properties of the magnets, due in some cases to the high operating temperatures, introduction of the modules in harsh environments and the possible detachment of the magnets due to the generated centrifugal forces.

Since it is no longer required to use permanent magnets, different types of ferromagnetic materials in the rotor modules 18' can be coupled to the blades 15 of the impeller 14, in order to optimise the electromagnetic efficiency, thus offering, for example, greater freedom in terms of design.

Furthermore, due to the modular solution, the limitations deriving from the use of the electromagnetic flow barrier technology known in the state of the art are overcome, since the rotor modules 18' can be joined directly on the periphery of an impeller 14 and not necessarily on a rotor shaft.

In general, the embedded solution described pursues the objective, common to various industrial fields, of reducing the weight and overall dimensions of complex electric generation and "motoring" systems.

Lastly, it is clear that modifications and variations can be made to what is described and illustrated here without departing from the scope of the present invention, as defined in the attached claims.

In particular, it is clear that different configurations of the rotor modules 18' can be provided, in particular as regards the arrangement of the electromagnetic flow barriers 20 and their shape.

Furthermore, the stator 22 can be a single one-piece component, comprising a plurality of polar expansions 26 and corresponding coils 28; in the same way, the annular rotor 18 can be a single one-piece component, having regions with electromagnetic flow barriers 20.

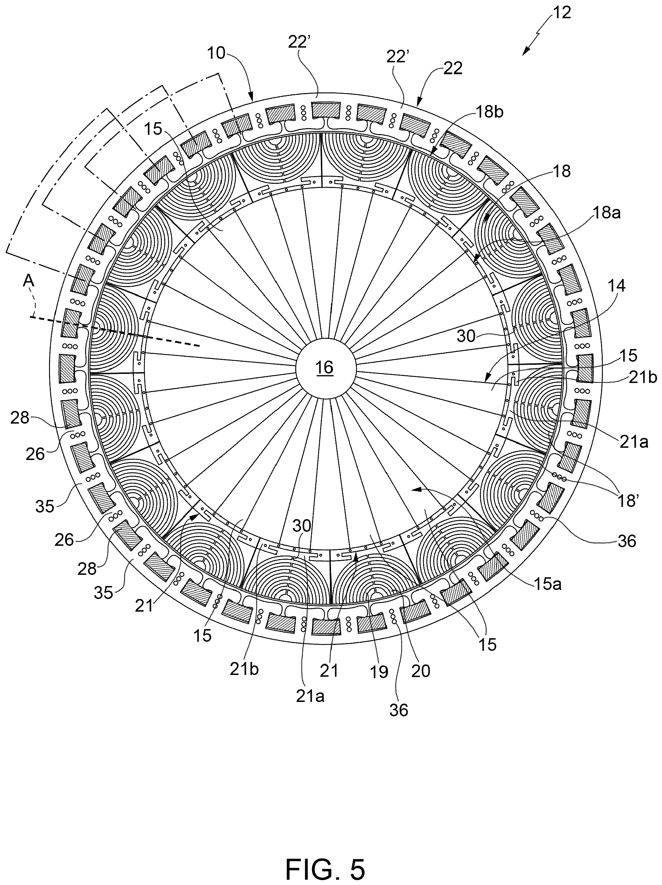

Figure 5 illustrates an embodiment in which the stator windings are of the distributed type.

In particular, the stator 22 has a plurality of polar expansions 26, uniformly distributed around the central shaft 16, and the stator windings, again indicated by 28, are of the distributed type.

The dash-dot line shows an example of coupling between the stator windings 28 of distributed type.

In a further variation, as described in the above-mentioned document WO 2011/018119 A1, the single rotor modules 18' are made by means of segments of ferromagnetic material, appropriately spaced and fastened to one another by fastening means and spacers of various types; in this case, the empty regions between the various segments, thus arranged, create the above-mentioned electromagnetic flow barriers 20.

The solution described can be applied in many different fields, such as aeronautics, wind power, energy, oil & gas, and in general in all cases in which it is expedient, and possible, to install an electric machine on an impeller of a fluid-dynamic machine.

## Claims

1. An electric machine (10), comprising:
- an impeller (14) having a rotation shaft;
- a rotor (18), having an annular configuration, mounted on the impeller (14), in a position circumferentially external to the impeller (14) with respect to the rotation shaft (16) thereof; and
- a stator (22), operatively coupled to the rotor (18) and arranged in a radially outer position with respect to the assembly of the impeller (14) and the rotor (18),
wherein the rotor (18) comprises a plurality of magnetic portions (19) and a plurality of electromagnetic flow barriers (20) interposed to the magnetic portions (19), the electric machine (10) being of the reluctance type; and the rotor (18) has a modular structure, comprising a plurality of rotor modules (18') configured to be arranged circumferencially around the rotation shaft (16) of the impeller (14), each defining an annular portion of the rotor (18),
wherein each rotor module (18') carries, at a radially inner surface (18a) of the rotor (18), a respective coupling element (21a), designed to mechanically couple with a corresponding coupling element (21b) carried by the impeller (14),
and wherein the corresponding coupling element (21b) carried by the impeller (14) is coupled to at least one blade (15) of the impeller (14), at one end thereof (15a) positioned at a distance from the rotation shaft (16).

2. The electric machine according to claim 1, wherein each rotor module (18') is coupled to at least one blade (15) of the impeller (14), by means of at least one respective coupling element (21a).

3. The electric machine according to any one of the preceding claims, wherein the rotor modules (18') are designed to be independent and electrically, magnetically, thermally and mechanically isolated and decoupled from one another.

4. The electric machine according to any one of the preceding claims, wherein each rotor module (18') has a respective arrangement of electromagnetic flow barriers (20) and a respective plurality of magnetic portions (19); wherein the electromagnetic flow barriers (20) include empty regions or regions of non-ferromagnetic material.

5. The electric machine according to claim 4, wherein an outer surface (18b) of the rotor (18) is not continuous but interrupted by cut-out portions in the vicinity of the electromagnetic flow barriers (20).

6. The electric machine according to claim 5, wherein the outer surface (18b) of the rotor (18) is coated with a coating layer (31) of non-ferromagnetic material.

7. The electric machine according to any one of the preceding claims, wherein also the stator (22) has a modular structure, comprising a plurality of stator modules (22') radially arranged around the rotation shaft(16); and wherein each stator module (22') is magnetically coupled to at least one portion of rotor module (18').

8. The electric machine according to claim 7, wherein magnetic field lines generated by each stator module (22') are closed within the portion of rotor module (18'), designed to be excited by the same stator module (22').

9. The electric machine according to claim 7 or 8, wherein each stator module (22') comprises a pair of polar expansions (26) and respective coils (28); wherein the polar expansions (26) have a base coupled to a support (35), the position of which can be radially and axially adjusted so as to statically and/or dynamically adjust characteristics of the air-gap of the magnetic circuit formed with said portion of rotor module (18').

10. The electric machine according to any one of the preceding claims, having reversible motor/generator operation.

11. The electric machine according to any one of the preceding claims, wherein the rotor (18) is without permanent magnets.

12. A fluid-dynamic machine (12), **characterised by** comprising an electric machine (10) according to any one of the preceding claims.

13. The fluid-dynamic machine according to claim 12, comprising a turbine provided with the impeller (14).

## Patentansprüche

1. Eine elektrische Maschine (10), umfassend:
- ein Laufrad (14) mit einer Drehwelle,
- einen Rotor (18) mit einem ringförmigen Aufbau, der auf dem Laufrad (14) in einer äußeren Umfangsposition des Laufrads (14) in Bezug auf dessen Drehwelle (16) montiert ist, und
- einen Stator (22), der wirksam mit dem Rotor (18) gekoppelt ist und in einer radial äußeren Position in Bezug auf die Baugruppe aus Laufrad (14) und Rotor (18) angeordnet ist,
wobei der Rotor (18) eine Vielzahl von magnetischen Abschnitten (19) und eine Vielzahl von elektromagnetischen Flussbarrieren (20), die zwischen den magnetischen Abschnitten (19) angeordnet sind, umfasst, wobei die elektrische Maschine (10) eine Reluktanzmaschine ist und der Rotor (18) einen modularen Aufbau aufweist, umfassend eine Vielzahl von Rotor-Modulen (18'), die um die Drehwelle (16) des Laufrads (14) umlaufend anordenbar sind, wobei diese jeweils einen RingAbschnitt des Rotors (18) bilden,
wobei jedes Rotor-Modul (18') an einer radial innenliegenden Fläche (18a) des Rotors (18) ein jeweiliges Kopplungselement (21a) trägt, das zur mechanischen Kopplung mit einem entsprechenden, von dem Laufrad (14) getragenen Kopplungselement (21b) ausgebildet ist,
und wobei das entsprechende, von dem Laufrad (14) getragene Kopplungselement (21b) mit zumindest einer Laufschaufel (15) des Laufrads (14) an einem Ende (15a) derselben in einem Abstand von der Drehwelle (16) positioniert ist.

2. Die elektrische Maschine gemäß Anspruch 1, wobei jedes Rotor-Modul (18') mittels zumindest einem jeweiligen Kopplungselement (21a) mit zumindest einer Laufschaufel (15) des Laufrades (14) gekoppelt ist.

3. Die elektrische Maschine gemäß einem der vorigen Ansprüche, wobei die Rotor-Module (18') unabhängig voneinander ausgebildet und elektrisch, magnetisch, thermisch und mechanisch voneinander isoliert und entkoppelt sind.

4. Die elektrische Maschine gemäß einem der vorigen Ansprüche, wobei jedes Rotor-Modul (18') eine jeweilige Anordnung von elektromagnetischen Flussbarrieren (20) sowie eine jeweilige Vielzahl von magnetischen Abschnitten (19) aufweist, wobei die elektromagnetischen Flussbarrieren (20) Leerbereiche oder Bereiche aus einem nichtferromagnetischen Material umfassen.

5. Die elektrische Maschine gemäß Anspruch 4, wobei eine Außenfläche (18b) des Rotors (18) nicht durchgängig, sondern durch Ausschnitte in der Nähe der elektromagnetischen Flussbarrieren (20) unterbrochen ist.

6. Die elektrische Maschine gemäß Anspruch 5, wobei die Außenfläche (18b) des Rotors (18) mit einer Überzugsschicht (31) aus einem nichtferromagnetischen Material beschichtet ist.

7. Die elektrische Maschine gemäß einem der vorigen Ansprüche, wobei der Stator (22) ebenfalls einen modularen Aufbau aufweist, umfassend eine Vielzahl von Stator-Modulen (22'), die radial um die Drehwelle (16) herum angeordnet sind, und wobei jedes Stator-Modul (22') magnetisch mit zumindest einem Abschnitt eines Rotor-Moduls (18') gekoppelt ist.

8. Die elektrische Maschine gemäß Anspruch 7, wobei von jedem Stator-Modul (22') erzeugte Magnetfeldlinien innerhalb des Abschnitts des Rotor-Moduls (18') geschlossen sind, wobei dieses so ausgeführt ist, dass es von demselben Stator-Modul (22') erregt wird.

9. Die elektrische Maschine gemäß Anspruch 7 oder 8, wobei jedes Stator-Modul (22') ein Paar Polschuhe (26) sowie jeweilige Spulen (28) umfasst, wobei die Polschuhe (26) eine Basis aufweisen, die mit einem Träger (35) gekoppelt ist, dessen Position radial und axial angepasst werden kann, um Eigenschaften des Luftspaltes des mit dem Abschnitt des Rotor-Moduls (18') gebildeten magnetischen Kreislaufs statisch und/oder dynamisch anzupassen.

10. Die elektrische Maschine gemäß einem der vorigen Ansprüche, mit einem umkehrbaren Motor-/Generator-Betrieb.

11. Die elektrische Maschine gemäß einem der vorigen Ansprüche, wobei der Rotor (18) ohne Permanentmagnete ausgeführt ist.

12. Eine fluiddynamische Maschine (12), **dadurch gekennzeichnet, dass** diese eine elektrische Maschine (10) gemäß einem der vorigen Ansprüche umfasst.

13. Die fluiddynamische Maschine gemäß Anspruch 12, umfassend eine mit dem Laufrad (14) ausgestattete Turbine.

## Revendications

1. Machine électrique (10), comprenant :
- une roue à aubes (14) ayant un arbre de rotation ;
- un rotor (18), ayant une configuration annulaire, monté sur la roue à aubes (14), dans une position circonférentiellement externe à la roue à aubes (14) par rapport à l'arbre de rotation (16) de celle-ci ; et
- un stator (22), couplé opérationnellement au rotor (18) et agencé dans une position radialement extérieure par rapport à l'ensemble de la roue à aubes (14) et du rotor (18),
dans laquelle le rotor (18) comprend une pluralité de portions magnétiques (19) et une pluralité de barrières de flux électromagnétique (20) interposées entre les portions magnétiques (19), la machine électrique (10) étant du type à réluctance ; et le rotor (18) a une structure modulaire, comprenant une pluralité de modules de rotor (18') configurés pour être agencés circonférentiellement autour de l'arbre de rotation (16) de la roue à aubes (14), chacun définissant une portion annulaire du rotor (18),
dans laquelle chaque module de rotor (18') porte, au niveau d'une surface radialement intérieure (18a) du rotor (18), un élément de couplage (21a) respectif, conçu pour se coupler mécaniquement à un élément de couplage (21b) correspondant porté par la roue à aubes (14),
et dans laquelle l'élément de couplage (21b) correspondant porté par la roue à aubes (14) est couplé à au moins une aube (15) de la roue à aubes (14), au niveau d'une extrémité de celle-ci (15a) positionnée à distance de l'arbre de rotation (16).

2. Machine électrique selon la revendication 1, dans laquelle chaque module de rotor (18') est couplé à au moins une aube (15) de la roue à aubes (14), au moyen d'au moins un élément de couplage (21a) respectif.

3. Machine électrique selon l'une quelconque des revendications précédentes, dans laquelle les modules de rotor (18') sont conçus pour être indépendants et isolés et découplés électriquement, magnétiquement, thermiquement et mécaniquement les uns des autres.

4. Machine électrique selon l'une quelconque des revendications précédentes, dans laquelle chaque module de rotor (18') a un agencement respectif de barrières de flux électromagnétique (20) et une pluralité respective de portions magnétiques (19), les barrières de flux électromagnétique (20) comportant des régions vides ou des régions en matériau non ferromagnétique.

5. Machine électrique selon la revendication 4, dans laquelle une surface extérieure (18b) du rotor (18) n'est pas continue mais interrompue par des portions de découpes à proximité des barrières de flux électromagnétique (20).

6. Machine électrique selon la revendication 5, dans laquelle la surface extérieure (18b) du rotor (18) est revêtue d'une couche de revêtement (31) en matériau non ferromagnétique.

7. Machine électrique selon l'une quelconque des revendications précédentes, dans laquelle le stator (22) a également une structure modulaire, comprenant une pluralité de modules de stator (22') agencés radialement autour de l'arbre de rotation (16), chaque module de stator (22') étant couplé magnétiquement à au moins une portion de module de rotor (18').

8. Machine électrique selon la revendication 7, dans laquelle des lignes de champ magnétique générées par chaque module de stator (22') sont fermées au sein de la portion de module de rotor (18'), conçue pour être excitée par le même module de stator (22').

9. Machine électrique selon la revendication 7 ou 8, dans laquelle chaque module de stator (22') comprend une paire d'extensions polaires (26) et des bobines (28) respectives, les extensions polaires (26) ayant une base couplée à un support (35), dont la position peut être réglée radialement et axialement de façon à régler statiquement et/ou dynamiquement des caractéristiques de l'entrefer du circuit magnétique formé avec ladite portion de module de rotor (18').

10. Machine électrique selon l'une quelconque des revendications précédentes, ayant un fonctionnement réversible moteur/génératrice.

11. Machine électrique selon l'une quelconque des revendications précédentes, dans laquelle le rotor (18) est dépourvu d'aimants permanents.

12. Machine à fluide dynamique (12), **caractérisée en ce qu'**elle comprend une machine électrique (10) selon l'une quelconque des revendications précédentes.

13. Machine à fluide dynamique selon la revendication 12, comprenant une turbine pourvue de la roue à aubes (14).
